# EUROPÄISCHE PATENTANMELDUNG

(11) **EP 3 349 078 A1**
(43) Veröffentlichungstag der Anmeldung: **18.07.2018**
(21) Anmeldenummer: 17151001.9
(22) Anmeldetag: 11.01.2017
(51) Int. Cl.: G05B 13/04, G05B 23/02

(54) **DIAGNOSEEINRICHTUNG UND VERFAHREN ZUR ÜBERWACHUNG UND/ODER OPTIMIERUNG EINER REGELEINRICHTUNG**

(71) Anmelder: Siemens Aktiengesellschaft, 80333 München (DE)
(72) Erfinder: Heiler, Patrick, 68753 Waghäusel (DE); Labisch, Daniel, 76149 Karlsruhe (DE); Pfeiffer, Bernd-Markus, 76744 Wörth (DE)

(57) **Zusammenfassung**

Die Erfindung betrifft eine Diagnoseeinrichtung und ein Verfahren zur Überwachung und/oder Optimierung einer Regeleinrichtung (2), wobei ein Datensatz mit im Betrieb der Regeleinrichtung (2) erfassten Prozessvariablen (w, u, y) abgespeichert und ausgewertet wird. Nach vorbestimmten Auswahlkriterien werden Zeitabschnitte (100 ... 105) ausgewählt, anhand der jeweils zugehörigen Zeitausschnitte der Datenfolgen wird zumindest ein Parameter eines Streckenmodells bestimmt und für verschieden Zeitabschnitte erhaltene Modellparameter werden zur Bestimmung und/oder Anzeige einer Diagnoseaussage ausgewertet. Gegebenenfalls werden zur Verbesserung der Regelgüte verschiedene Vorschläge zur Optimierung der Regeleinrichtung (2) automatisch erzeugt und einem Bediener (4) angeboten.

## Beschreibung

Die Erfindung betrifft eine Diagnoseeinrichtung und ein Verfahren zur Überwachung und/oder Optimierung einer Regeleinrichtung für eine Regelstrecke, wobei die Diagnoseeinrichtung dazu ausgebildet ist, zumindest einen Datensatz mit im Betrieb der Regeleinrichtung erfassten zeitlichen Datenfolgen der Prozessvariablen Sollwert, Stellgröße und Regelgröße der Regelstrecke abzuspeichern und zur Bestimmung und/oder Anzeige einer Diagnoseaussage auszuwerten. Falls erforderlich, kann eine Optimierung der Regeleinrichtung zur Verbesserung der Regelgüte vorgenommen werden.

In Verfahrens- oder prozesstechnischen Anlagen werden vielfältige Regelkreise für die Beeinflussung physikalischer oder chemischer Größen in technischen Prozessen eingesetzt. Dabei ist eine permanente und automatische Überwachung der Regelkreise bezüglich ihrer Regelgüte von Vorteil, damit bei nachlassender Leistungsfähigkeit einzelner Regelkreise rechtzeitig und gezielt an der richtigen Stelle der Anlage mit Maßnahmen zur Instandhaltung und/oder Regleroptimierung eingegriffen werden kann. Eine Regleroptimierung kann auf der Basis eines Streckenmodells erfolgen, zu dessen Identifikation anhand einer realen Regelstrecke erfasste Werte der Prozessvariablen Stellgröße und Regelgröße ausgewertet werden. Beispielsweise aus der EP 0 520 233 A2 ist bekannt, wie Parameter eines linearen Streckenmodells identifiziert und ein klassischer PID-Regler in Abhängigkeit davon parametriert werden kann. Bei Strecken mit nichtlinearen Eigenschaften, deren Verhalten vom jeweiligen Arbeitspunkt abhängig ist, liefert das bekannte Verfahren allerdings häufig nur unzureichende Ergebnisse.

Der Erfindung liegt die Aufgabe zugrunde, eine Diagnoseeinrichtung und ein Verfahren zur Überwachung und/oder Optimierung einer Regeleinrichtung für eine Regelstrecke zu schaffen, die bei Regelkreisen mit Regelstrecken, deren Verhalten vom jeweiligen Arbeitspunkt des Regelkreises abhängig ist, bessere Ergebnisse liefert.

Zur Lösung dieser Aufgabe weist die neue Diagnoseeinrichtung zur Überwachung und/oder Optimierung einer Regeleinrichtung der eingangs genannten Art die in Anspruch 1 angegebenen Merkmale auf. In den abhängigen Ansprüchen sind Weiterbildungen der Erfindung, in Anspruch 9 ein Verfahren zur Überwachung und/oder Optimierung einer Regeleinrichtung, in Anspruch 10 ein Computerprogramm zur Durchführung des Verfahrens und in Anspruch 11 ein entsprechendes Computerprogrammprodukt beschrieben.

Eine Diagnose von Regelkreisen, deren Verhalten vom jeweiligen Arbeitspunkt abhängig ist, ist insbesondere bei Chargen-Prozessen, die auch als Batch-Prozesse bezeichnet werden, sowie bei kontinuierlichen Prozessen, die mit Lastwechseln oder Sortenwechseln einhergehen, vorteilhaft anwendbar. Bei rein kontinuierlichen Prozessen mit festem Arbeitspunkt ist dagegen eine arbeitspunktabhängige Diagnose normalerweise nicht erforderlich. Ursachen für eine Arbeitspunktabhängigkeit können ein zeitvariantes und/oder ein nichtlineares Prozessverhalten sein. Ein nichtlineares Prozessverhalten tritt beispielsweise bei nichtlinearer Kennlinie eines Aktors, zum Beispiel bei einer nichtlinearen Ventilkennlinie, Pumpenkennlinie, Wärmetauscherkennlinie etc., auf. Auch mechanische Effekte wie Reibung oder Lose in Stellgliedern können Ursachen für ein nichtlineares Verhalten sein. Außerdem weisen alle chemischen Reaktionen, zum Beispiel im Bezug auf ihre Reaktionskinetik, und alle biologischen Wachstumsvorgänge, die häufig einen exponentiellen Verlauf besitzen, nichtlineares Verhalten auf. Weitere Ursachen für nichtlineares Verhalten sind Wärmestrahlung, die proportional zur vierten Potenz der Temperatur ist, sowie Phasenübergänge von einem flüssigen zu einem gasförmigen Aggregatzustand oder umgekehrt. Derart arbeitspunktabhängiges Verhalten äußert sich als Veränderung zumindest eines Parameters eines identifizierten Streckenmodells und wird durch die neue Diagnoseeinrichtung in vorteilhafter Weise festgestellt. Eine entsprechende Diagnoseaussage wird bestimmt und gegebenenfalls zur Anzeige gebracht. Falls bei der Diagnose ein unbefriedigendes Verhalten eines Regelkreises festgestellt wird, können gemäß Weiterbildungen der Erfindung Vorschläge zur Verbesserung oder Optimierung der im Regelkreis eingesetzten Regeleinrichtung abgeleitet werden.

Zur Identifikation einer geeigneten Struktur des Streckenmodells und dessen Parameter kann ein "historischer" Datenbestand, der bei einem früheren Betrieb der Regelstrecke in einer Anlage erfasst und abgespeichert wurde, ausgewertet werden oder es kann eine Möglichkeit genutzt werden, eine Regelstrecke beispielsweise durch Anlegen eines sprungförmigen Stellgrößenverlaufs aktiv im Handbetrieb anzuregen. Die Bestimmung des Simulationsmodells kann beispielsweise mit Hilfe des aus der bereits eingangs genannten EP 0 520 233 A2 bekannten Verfahrens erfolgen.

Zur Erleichterung einer Identifikation verschiedener Streckenmodelle, die je nach Arbeitspunkt des Regelkreises voneinander abweichen, wird ein im Betrieb der Regeleinrichtung erfasster und abgespeicherter Datensatz, der den der weiteren Auswertung zugrunde liegenden Datenbestand repräsentiert, in verschiedene Zeitabschnitte aufgeteilt. Diese Aufteilung erfolgt vorzugsweise automatisch anhand vorbestimmter Auswahlkriterien oder beispielsweise durch einen Bediener mittels eines grafischen Editors, welcher Zeitverläufe verschiedener, im Regelkreis auftretender Prozessvariablen grafisch darstellt und eine manuelle Auswahl geeigneter Zeitabschnitte durch den Bediener ermöglicht. Vorzugsweise werden aus dem Datensatz Zeitabschnitte ausgewählt, die für die Bestimmung eines vom jeweiligen Arbeitspunkt abhängigen Parameters eines Streckenmodells besonders geeignet sind. Dies sind beispielsweise Zeitabschnitte, die jeweils Folgendes enthalten: einen Sollwertsprung mit Vor- und Nachlauf, einen Automatikbetrieb mit konstantem Sollwert, einen Handbetrieb mit manueller Vorgabe der Stellgröße, Betriebsphasen mit einer Sollwertrampe oder andere Bereiche mit permanent veränderlichem Sollwert. In dem Fall, dass die Prozessidentifikation in den verschiedenen Zeitabschnitten zu nahezu unveränderten Parametern des Streckenmodells führt, kann als Diagnoseaussage beispielsweise bestimmt und angezeigt werden, dass das Verhalten der Strecke mit einem einzigen, arbeitspunktunabhängigen Modell ausreichend gut beschrieben werden kann.

In einer besonders vorteilhaften Ausgestaltung der Erfindung werden gemäß einem ersten Kriterium Zeitabschnitte ausgewählt, in welchen zumindest näherungsweise ein stationärer Zustand des Regelkreises festgestellt werden kann. Anhand der jeweils zugehörigen Zeitausschnitte der Datenfolgen der Prozessvariablen Stellgröße und Regelgröße werden zeitliche Mittelwerte berechnet, anhand deren eine stationäre Kennlinie der Regelstrecke ermittelt werden kann. Zwischen jedem Paar - benachbarter Punkte der Kennlinie wird die lokale Prozessverstärkung bestimmt. Falls die lokale Prozessverstärkung nahezu überall gleich ist, kann als Diagnoseaussage ermittelt und angezeigt werden, dass eine nichtlineare Kennlinie auszuschließen ist. Für die Überwachung einer Regeleinrichtung für eine Regelstrecke stellt bereits die Streckenverstärkung eine zur Diagnose aussagefähige Größe dar, da sie insbesondere zur Charakterisierung eines arbeitspunktabhängig variierenden Verhaltens der Strecke aufgrund von Nichtlinearitäten herangezogen werden kann.

Gemäß einer vorteilhaften Weiterbildung wird der Wertebereich der Prozessvariable Sollwert ermittelt und in mehrere Teilbereiche eingeteilt. Dieses so genannte Clustering erfolgt in bis zu fünf Gruppen, denen jeweils ein Teilbereich des Wertebereichs zugeordnet ist, beispielsweise mit einem so genannten k-Means-Algorithmus. Die gemäß dem ersten Kriterium ausgewählten Zeitabschnitte werden ihrem jeweiligen Mittelwert der Prozessvariable Sollwert entsprechend den Teilbereichen zugeordnet. Je nach Clusterzugehörigkeit kann sich nun eine differenzierte Diagnose anschließen. Beispielsweise kann die jeweilige Regelgüte in den Bereichen mit konstantem Sollwert clusterspezifisch bestimmt werden oder es kann sich eine Detektion von Schwingungen, deren Auftreten clusterabhängig ist, anschließen. Hierzu geeignete Verfahren sind aus der Literatur bereits bekannt, siehe zum Beispiel die Aufsätze von Bernd-Markus Pfeiffer und Christian Heck, "Cloud-basierter Service ermöglicht flexible Überwachung von Regelkreisen im Anlagenbetrieb", atp edition 05/2015, Seiten 18 bis 21 und "Lebenszyklus-Management von Regelkreisen", Automation 2016, Baden-Baden, Tagungs-CD, VDI-Verlag, Düsseldorf. Falls insbesondere die Regelgüte in allen Clustern ausreichend hoch ist und sich nicht stark voneinander unterscheidet, ist eine mögliche Nichtlinearität im Regelkreis so gering, dass sie sich nicht störend auf das Regelverhalten auswirkt. In diesem Fall besteht kein weiterer Handlungsbedarf.

Für die Diagnose ist zudem von Vorteil, wenn der Datensatz nach Zeitabschnitten durchsucht wird, die jeweils einen Sollwertsprung aufweisen. Liegen Anfangs- und Endwert innerhalb desselben Clusters, können die dabei gefundenen Zeitabschnitte dem jeweiligen Cluster zugeordnet werden. Bei größeren Sollwertsprüngen, deren Anfangs- und Endwert nicht innerhalb desselben Clusters liegen, ist eine derartige Zuordnung zu einem einzelnen Cluster dagegen nicht möglich. Anhand des einem Cluster zugeordneten Zeitabschnitts mit dem größten Sollwertsprung kann wegen des dann besonders guten Stör-/Nutzsignal-Verhältnisses vorteilhaft eine Identifikation eines dynamischen Streckenmodells, das wiederum dem jeweiligen Cluster zugeordnet wird, vorgenommen werden. Falls keine Sollwertsprünge innerhalb eines Clusters vorhanden sind, eignen sich hierzu auch Zeitabschnitte aus dem Datensatz mit andersartiger, noch hinreichender Anregung der Prozessdynamik, beispielsweise mit einem rampenförmigen Sollwertverlauf, Zeitabschnitte mit stark veränderlichem Sollwert oder Zeitabschnitte, in welchen im Handbetrieb des Reglers Stellwertsprünge manuell erzeugt wurden. An die Identifikation eines dynamischen Streckenmodells kann sich dessen Validierung durch Simulation des geschlossenen Regelkreises vom Beginn eines dem jeweiligen Cluster zugeordneten Zeitabschnitts bis zu dessen Ende anschließen. Falls bei der Simulation eine nicht ausreichende Güte des Streckenmodells festgestellt wurde, kann ein anderer oder ein längerer Zeitabschnitt für eine erneute Identifikation eines dynamischen Streckenmodells für den jeweiligen Cluster herangezogen werden. Für Zeitabschnitte mit kleineren Sollwertsprüngen innerhalb desselben Clusters kann zur Durchführung einer weiteren Diagnose zudem die Regelgüte mit dem vorhandenen Regler bestimmt werden. Ein dazu geeignetes Verfahren ist beispielsweise in dem Aufsatz von Bernd-Markus Pfeiffer, "Control Performance Monitoring mit einer Kombination aus stochastischen und deterministischen Merkmalen", GMA-Kongress 2005, Baden-Baden, VDI-Berichte 1883, VDI-Verlag, Düsseldorf, Seiten 411 bis 420, beschrieben.

Falls die jeweils clusterspezifisch identifizierten Streckenmodelle deutlich voneinander abweichende Streckenverstärkungen und eine Dynamik mit etwa gleichen Zeitkonstanten aufweisen, kann ein so genanntes Hammerstein-Modell als gemeinsames Streckenmodell für alle Cluster verwendet werden, welches aus einer nichtlinearen Kennlinie der Prozessverstärkung und einem der mittleren Dynamik der verschiedenen Streckenmodellen entsprechenden dynamischen Modell zusammengesetzt ist. Ein zur Identifikation eines derartigen Hammerstein-Modells geeignetes Verfahren wird beispielsweise in der europäischen Patentanmeldung mit dem Anmeldeaktenzeichen 15177789.3 vorgeschlagen. Zur Überprüfung der Qualität des identifizierten Hammerstein-Modells kann anschließend ein Wert einer Gütefunktion zur Bewertung der quantitativen Abweichungen zwischen virtuellem Modell und realer Regelstrecke insbesondere über den gesamten Datensatz berechnet werden. Falls das Hammerstein-Modell eine gute Approximation des Prozessverhaltens darstellt, kann anschließend im Rahmen einer Optimierung der Regeleinrichtung die Inverse der stationären Kennlinie, welche durch die nichtlineare Prozessverstärkung bestimmt ist, gebildet und ein dieser entsprechendes Kompensationsglied beispielsweise in Form eines Polygonzugs zwischen Regler und Regelstrecke geschaltet werden. Durch diese automatisierte und für den Anwender besonders anschauliche Maßnahme kann eine deutliche Verbesserung des Regelverhaltens des Regelkreises erzielt werden.

Ist die Approximation des Prozessverhaltens durch das Hammerstein-Modell nicht von ausreichender Qualität, werden zusätzlich für die verschiedenen Cluster dynamische Modelle ermittelt. Anhand von Simulationsläufen für ausgewählte Zeitabschnitte, wobei das für den jeweiligen Cluster erhaltene dynamische Streckenmodell verwendet wird, kann bei Verwendung der bisherigen Regeleinrichtung zur Bestimmung einer Diagnoseaussage für die Cluster jeweils ein Wert eines vorgegebenen oder vorgebbaren Gütekriteriums berechnet werden. Falls die Regelgüte in allen Clustern ausreichend hoch ist und sich nicht stark voneinander unterscheidet sind die Abweichungen zwischen den dynamischen Modellen so gering, dass sie sich nicht störend auf das Prozessverhalten auswirken. Es wird somit die Diagnoseaussage erhalten, dass kein weiterer Handlungsbedarf zur Optimierung der Regeleinrichtung besteht.

Falls dagegen die Regelgüte in verschiedenen Clustern deutlich unterschiedlich ausfällt, kann im Rahmen einer sich anschließenden Optimierung der Regeleinrichtung automatisch ein robuster Regler modellbasiert anhand der für die Cluster erhaltenen dynamischen Streckenmodelle mit einem Verfahren der Polbereichsvorgabe mittels Gütevektoroptimierung ermittelt werden, das später näher erläutert wird. Bei diesem robusten Reglerentwurf wird möglicherweise ein Regler mit einem Parametersatz erhalten, der mit allen Modellen eine zufriedenstellende Regelgüte ermöglicht.

Falls die Regelgüte in verschiedenen Clustern sehr unterschiedlich ausfällt, beispielsweise da die Werte der Prozessverstärkung und/oder die Zeitkonstanten der verschiedenen dynamischen Modelle weit auseinander liegen, kann im Rahmen der Optimierung der Regeleinrichtung ein so genanntes Gain-Scheduling-Verfahren für den Entwurf eines neuen Reglers für ein verbessertes Regelkreisverhalten angewandt werden. Beim Gain-Scheduling wird für jedes Cluster separat ein Regler entworfen und für die Clusterübergänge ein Parameterfahrplan mit linearer Interpolation geschaffen. Das für das jeweilige Cluster zuvor bei der Streckenidentifikation erhaltene dynamische Streckenmodell dient als Basis für den Entwurf des für das jeweilige Cluster verwendeten Reglers. Gain-Scheduling ist beispielsweise aus dem Siemens Industry Online Support, Anwendungsbeispiel mit Beitrags-ID: 38755162, "PID-Regelung mit arbeitspunktabhängiger Parametersteuerung (Gain-Scheduling) und PID-Tuning" bekannt.

Eine Diagnoseeinrichtung und ein Diagnoseverfahren zur Überwachung und/oder Optimierung einer Regeleinrichtung für eine Regelstrecke gemäß der vorliegenden Anmeldung können beispielsweise mittels eines Engineering-Werkzeugs eines Prozessleitsystems oder vorteilhaft in einer Software-Umgebung zur Cloud-basierten Anlagenüberwachung implementiert werden. Eine derartige Software-Umgebung stellt beispielsweise der datenbasierte Remote-Service "Control Performance Analytics" der Siemens AG dar. Daten aus einer Kundenanlage werden mit Hilfe von Software-Agenten gesammelt, aggregiert und an ein Siemens Service Operation Center geschickt, in welchem sie auf einem Remote-Service-Rechner abgespeichert werden. Dort werden die Daten mit Hilfe von verschiedenen "Data Analytics" Software-Applikationen halbautomatisch ausgewertet. Bei Bedarf können für den Remote Service besonders geschulte Experten auf dieser Datenbasis hocheffizient arbeiten. Die Ergebnisse der Diagnose und der Optimierung der Regelung können auf einem Monitor des Remote-Service-Rechners angezeigt und/oder auf einem Sharepoint bereitgestellt werden, so dass sie vom Endkunden, das heißt dem Bediener der automatisierten prozesstechnischen Anlage, zum Beispiel in einem Browser betrachtet werden können. Ergibt ein Vergleich der neu entworfenen Regeleinrichtung mit der in der Anlage bereits vorhandenen Regelung für den Anwender Vorteile, kann diesem der Erwerb und der Einsatz der neuen Regeleinrichtung angeboten werden.

Die Diagnoseeinrichtung und das Verfahren zur Überwachung und/oder Optimierung einer Regeleinrichtung werden somit bevorzugt in Software oder in einer Kombination Soft-/Hardware implementiert, so dass die Erfindung auch ein Computerprogramm mit durch einen Computer ausführbaren Programcodeanweisungen zur Implementierung des Verfahrens auf einer geeigneten Recheneinheit betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann beispielsweise in einem Speicher eines Leitsystems einer automatisierten prozesstechnischen Anlage vorgehalten oder in diesen geladen werden, so dass beim Betrieb der Anlage das Verfahren zur Überwachung der Regeleinrichtung und gegebenenfalls zu deren Optimierung automatisch ausgeführt wird, oder das Computerprogramm kann bei einer Cloud-basierten Umgebung in einem Speicher eines Remote-Service-Rechners vorgehalten oder in diesen ladbar sein. Zudem kann das Computerprogramm auch in einem mit dem Leitsystem und dem Remote-Service-Rechner verbundenen Rechner vorgehalten sein, der über Netzwerke mit den beiden anderen Systemen kommuniziert.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein Blockschaltbild eines Regelkreises mit Diagnoseeinrichtung,
- Figur 2: einen Regelkreis mit Kompensation einer arbeitspunktabhängigen Prozessverstärkung,
- Figur 3: eine Kennlinie einer nichtlinearen Prozessverstärkung,
- Figur 4: eine Kompensationskennlinie für die nichtlineare Prozessverstärkung gemäß Figur 3,
- Figur 5: eine Prinzipdarstellung eines Polgebiets zur Verdeutlichung eines Reglerentwurfs mit Polbereichsvorgabe,
- Figuren 6 und 7: Zeitverläufe der Prozessvariablen Sollwert, Regel-größe bzw. Stellgröße,
- Figur 8: eine nichtlineare stationäre Kennlinie der Regel strecke, ermittelt aus stationären Zuständen im Datensatz,
- Figur 9: eine Kennlinie einer arbeitspunktabhängigen Streckenverstärkung, ermittelt aus der Kennlinie gemäß Figur 11,
- Figur 10: konstant vorgegebene Sollwerte und daraus ermittelte Clusterzentren, und
- Figur 11: Zeitverläufe der Prozessvariablen Sollwert und Regelgröße in einem ausgewählten Zeitabschnitt mit einem zweiten Sollwertsprung.

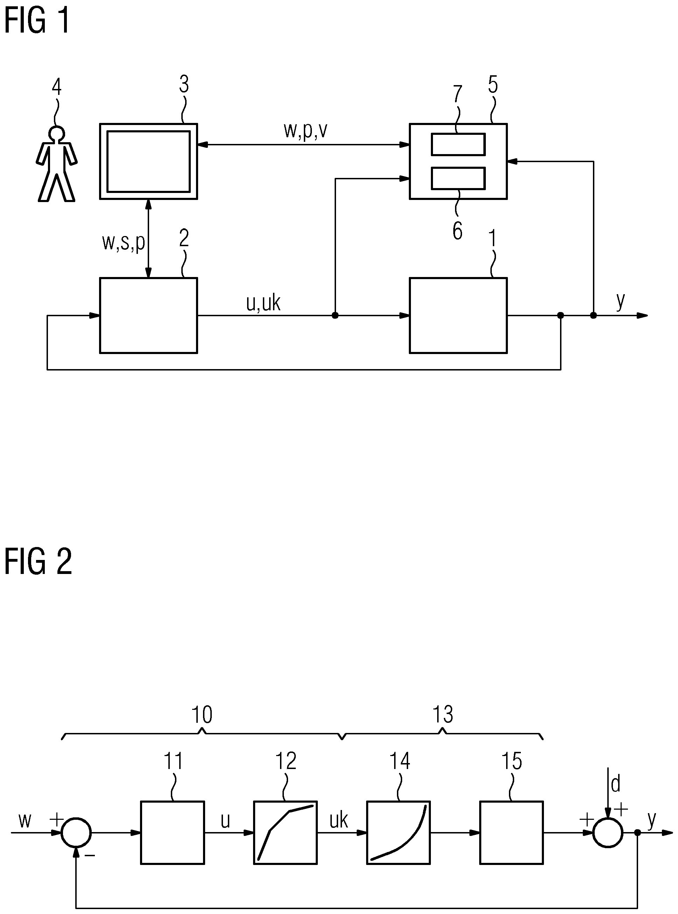

Gemäß Figur 1 bildet eine Regelstrecke 1 mit einer Regeleinrichtung 2 einen Teil einer automatisierten prozesstechnischen Anlage, deren Verhalten überwacht und gegebenenfalls optimiert werden soll. Eine Regelgröße y wird an der Regelstrecke 1 gemessen und zur Einregelung auf einen Sollwert w, der beispielsweise durch eine Bedieneinheit 3 vorgegeben wird, auf die Regeleinrichtung 2 zurückgeführt. Durch die Bedieneinheit 3 können zudem mittels eines Steuersignals s die Struktur der Regeleinrichtung 2 ausgewählt und der dabei festgelegte Reglertyp mit den jeweils erforderlichen Parametern p versehen werden. Dies kann automatisiert oder den Eingaben eines Bedieners 4 entsprechend erfolgen. Mittels des Steuersignals s ist insbesondere die Struktur eines konventionellen P-, PD-, PI- oder PID-Reglers, eines konventionellen Reglers mit nachgeschaltetem Kennlinienglied zur Kompensation einer arbeitspunktabhängigen Prozessverstärkung oder eines Reglers, entworfen nach dem Gain-Scheduling-Verfahren, auswählbar.

Die Parameter p des jeweils ausgewählten Reglers werden durch eine Einrichtung 5, die zur Überwachung und Optimierung der Regeleinrichtung 2 ausgebildet ist, automatisch bestimmt und dem Bediener 4 durch Anzeige auf der Bedieneinheit 3 zur wahlweisen Übergabe an die Regeleinrichtung 2 angeboten. Die Einrichtung 5 weist einen Datenspeicher 6 auf, in welchem ein oder mehrere Datensätze mit im Betrieb der Regeleinrichtung 2 erfassten zeitlichen Datenfolgen verschiedener Prozessvariablen, insbesondere des Sollwerts w, einer Stellgröße u und der Regelgröße y, abgespeichert werden. Dabei kann es sich beispielsweise um historische Prozessdaten handeln, die bei einem früheren Betrieb der Anlage im Sinne einer nicht-invasiven Diagnose erfasst wurden. Ebenso kann es sich bei den im Speicher 6 hinterlegten Daten um Verläufe der Prozessvariablen handeln, die durch aktive Anregung der Regelstrecke 1 i m Handbetrieb erhalten wurden, beispielsweise bei sprungförmiger Anregung zur besseren Identifikation eines Simulationsmodells für die Regelstrecke 1. Eine Auswerteeinrichtung 7 identifiziert anhand des oder der im Datenspeicher 6 hinterlegten Datensätze die Struktur und die Parameter eines oder mehrerer geeigneter Simulationsmodelle, wobei im Falle mehrerer Simulationsmodelle diese jeweils ebenfalls durch die Auswerteeinrichtung 7 ermittelt und Arbeitspunkten der Regeleinrichtung 2 zugeordnet werden. Auf der Basis des oder der dabei erhaltenen Simulationsmodelle sowie unter Berücksichtigung verschiedener Vorgaben v des Bedieners 4, zum Beispiel einer Vorgabe von Nebenbedingungen, die bei einer Parameteroptimierung zu berücksichtigen sind, werden zudem die Parameter p durch die Auswerteeinrichtung 7 festgelegt. Die Einrichtung 5 zur Überwachung und/oder Optimierung der Regeleinrichtung 2 kann beispielsweise durch ein Engineering-Werkzeug eines Leitsystems oder durch einen Remote-Service-Rechner einer Cloud-basierten Anlagenüberwachung implementiert sein.

In Figur 2 ist als Beispiel eine Struktur einer Regeleinrichtung 10 dargestellt, die erhalten wird, wenn als Reglertyp der Regeleinrichtung 2 (Figur 1) ein herkömmlicher Regler 11, zum Beispiel ein PID-Regler, mit nachgeschaltetem Glied 12 zur Kompensation einer Nichtlinearität einer Regelstrecke 1 (Figur 1) ausgewählt ist. Die Regelstrecke 1 wird in dem in Figur 2 gezeigten Ausführungsbeispiel durch ein Hammerstein-Modell 13 nachgebildet, welches aus einem Kennlinienglied 14 zur Modellierung einer arbeitspunktabhängigen Prozessverstärkung und einem diesem nachgeschalteten linearen dynamischen Modell 15 zusammengesetzt ist. Für eine möglichst realitätsnahe Validierung des bei einer Prozessidentifikation gefundenen Hammerstein-Modells 13 wird zusätzlich eine Störung d, die beispielsweise als farbiges Rauschen gestaltet sein kann, am Modellausgang aufgeschaltet. Stellgröße u, Regelgröße y und Sollwert w wurden bereits anhand Figur 1 erläutert. Durch das Kompensationsglied 12 wird aus der Stellgröße u eine kompensierte Stellgröße uk gebildet, die bei einer Regelkreissimulation auf das Hammerstein-Modell 13 oder bei der Anwendung der Regeleinrichtung 10 in der realen Anlage auf die Regelstrecke 1 (Figur 1) gegeben wird. Zur Kompensation bildet ein Polygonzug des Glieds 12 eine Inverse der Kennlinie des Glieds 14 nach, so dass der Regler 11 insgesamt wieder ein lineares Streckenverhalten zu sehen bekommt.

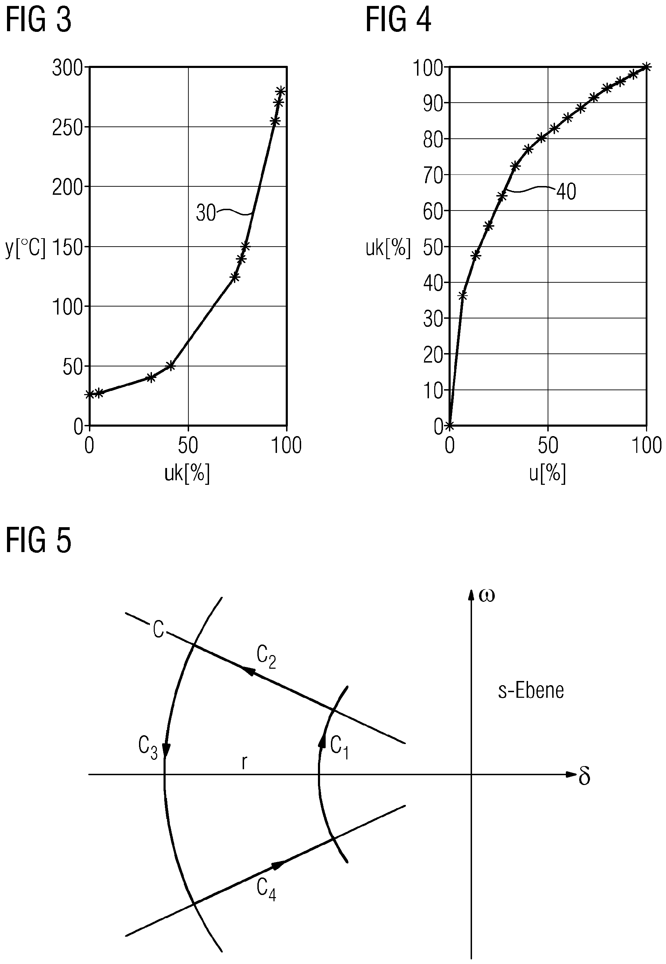

Anhand der Figuren 3 und 4 soll zunächst eine Optimierung einer Regeleinrichtung für den Fall näher erläutert werden, dass eine Regelstrecke 1 (Figur 1) durch ein Hammerstein-Modell 13 (Figur 2) gut approximiert werden kann. In dem Diagramm gemäß Figur 3 ist auf der Abszisse die kompensierte Stellgröße uk in Prozent (%) und auf der Ordinate die Regelgröße y in Grad Celsius (°C) aufgetragen. Eine Kennlinie 30 wurde punktweise ermittelt; die jeweils berechneten Punkte sind auf der Kennlinie 30 durch Sterne markiert. Die Kennlinie 30 kann als eine Funktion y = f(uk) angesehen werden, wobei uk das kompensierte Stellsignal darstellt, welches aufgrund des nachgeschalteten Kompensationsglieds 12 (Figur 2) im realen Betrieb tatsächlich an die Regelstrecke 1 (Figur 1) ausgegeben wird. Die Randbereiche können bei Bedarf linear extrapoliert werden, da sie an einer realen Regelstrecke oft schwer messbar sind. Figur 4 zeigt eine anhand der Kennlinie 30 gemäß Figur 3 ermittelte Kennlinie 40 einer Funktion uk = g(u) zur Umrechnung einer durch den Regler 11 (Figur 2) ausgegebenen Stellgröße u in eine durch das Kompensationsglied 12 (Figur 2) daraus erzeugte, kompensierte Stellgröße uk. An der Abszisse ist die Stellgröße u, an der Ordinate die kompensierte Stellgröße uk aufgetragen.

Prinzipiell ist eine Inversion einer Kennlinie möglich, wenn die Spiegelung der Kennlinie an der Winkelhalbierenden zu einer Funktion führt, die jedem Wert auf der Abszisse einen eindeutigen Ordinatenwert zuordnet. Invertierbar sind also nur streng monoton wachsende oder streng monoton fallende Kennlinien, die einer injektiven Abbildung entsprechen.

Die stationäre Kennlinie 30 repräsentiert die stationäre Verstärkung der Strecke und bildet daher einen Stellbereich, zum Beispiel 0 bis 100 Prozent einer Ventilstellung, auf einen Wertebereich einer Regelgröße, zum Beispiel 20 bis 300 °C, ab. Die Kennlinie 30 wird zunächst punktweise invertiert. Die inverse Kennlinie würde jedoch den Wertebereich der Regelgröße auf den Stellbereich abbilden. Ihr wird daher eine lineare Transformation vorgeschaltet, die den Stellbereich auf den Regelbereich abbildet. Die Verkettung dieser Transformation mit der inversen Kennlinie bildet insgesamt die Kompensationskennlinie 40. Die Kompensationskennlinie 40, welche die lineare Transformation bereits beinhaltet, bildet daher die ursprünglich durch den Regler ausgegebene Stellgröße u auf eine kompensierte Stellgröße uk ab, die denselben Stellbereich umfasst, so dass die Stellgrößenbegrenzungen am Regler 11 (Figur 2) weiterhin mit den Stellgrößenbegrenzungen am Aktor der realen Regelstrecke 1 (Figur 1) übereinstimmen. Die Realisierung eines Kompensationsglieds 12 (Figur 2) in einer Regeleinrichtung 2 (Figur 1), 10 (Figur 2) kann beispielsweise in dem Leitsystem SIMATIC PCS 7 mit Hilfe des Funktionsbausteins Polygon aus der Advanced Process Library erfolgen. Bei Verwendung eines einem Regler 11 (Figur 2) in einer Regeleinrichtung 2, 10 nachgeschalteten Kompensationsglieds 12 kann einem modellbasierten Entwurf des Reglers 11 ein lineares dynamisches Modell 15 mit mittlerem Verstärkungsfaktor zugrunde gelegt werden.

Falls durch die Diagnoseeinrichtung 5 (Figur 1) für verschiedene Cluster, in welche der Wertebereich des Sollwerts w unterteilt wird, dynamische Streckenmodelle identifiziert werden, deren Verstärkungsfaktoren und Zeitkonstanten nicht zu weit auseinander liegen, und falls eine Simulation des bisherigen Reglers mit den Modellen aller Cluster zu deutlich unterschiedlichen Werten der Regelgüte in den verschiedenen Clustern führt, kann ein robuster Reglerentwurf eine geeignete Maßnahme zur Optimierung der Regeleinrichtung 2 darstellen. Bei einem robusten Reglerentwurf wird nach einem Parametersatz für den Regler gesucht, der mit den jeweils für die Cluster identifizierten Modellen über den gesamten Datensatz eine zufriedenstellende Regelgüte ermöglicht. Für den robusten Reglerentwurf für verschiedene lineare Modelle, die als Modellfamilie angesehen werden können, eignet sich besonders das Verfahren der Polbereichsvorgabe mittels Gütevektoroptimierung nach Steinhauser. Bei der klassischen Polvorgabe werden die Pole des geschlossenen Regelkreises für ein Modell vorgegeben. Die Pole legen dabei das dynamische Verhalten des geregelten Systems fest. Verändert sich nun das Modell, wobei derselbe Regler verwendet wird, so verschieben sich die Pole und das dynamische Verhalten verändert sich. In der Regel ist damit eine Verschlechterung der Regelgüte verbunden. Bei der Polbereichsvorgabe erfolgt der Reglerentwurf derart, dass die Pole aller geschlossenen Regelkreise der mit demselben Regler geregelten Modellfamilie in einem vorgegebenen oder vorgebbaren Gebiet liegen. Anhand Figur 5 soll eine Polbereichsvorgabe näher erläutert werden. Dargestellt in Figur 5 ist eine s-Ebene mit einem Realteil δ auf der Abszisse und einem Imaginärteil ω auf der Ordinate. Es wird ein Polgebiet r definiert, wobei ein Rand C₁ eine Mindestdynamik, das heißt eine Mindestschnelligkeit des geschlossenen Regelkreises, und Ränder C₂ und C₄ eine Mindestdämpfung des geschlossenen Regelkreises vorgeben. Ein Rand C₃ begrenzt die kleinste Zeitkonstante des geschlossenen Regelkreises, was der Vorgabe einer maximalen Bandbreite entspricht und vor allem für die Realisierung als digitaler Regler wichtig ist. Da die Pole des geschlossenen Regelkreises für alle identifizierten Streckenmodelle im vorgegebenen Polgebiet Γ liegen, besitzen somit alle die Mindestdynamik und die Mindestdämpfung. Zum Entwurf des Reglers kann eine Gütefunktion definiert werden, die für Pole innerhalb des Polgebiets Γ einen sehr kleinen Wert nahe Null und für Pole außerhalb einen sehr großen Wert, beispielsweise deutlich größer als Eins, annimmt. Mittels Variation der Reglerparameter kann nun bezüglich der Gütefunktion eine Optimierung durchgeführt werden. Vorteilhaft dabei ist, dass sich bei geeigneter Wahl der Gütefunktion deren Gradient bezüglich der Reglerparameter einer stationären oder dynamischen Ausgangsrückführung analytisch bilden lässt, so dass vorteilhafterweise gradientenbasierte Optimierungsverfahren eingesetzt werden können. Anstatt einer statischen oder dynamischen Ausgangsrückführung kann dieses Verfahren auch auf die Anwendung eines herkömmlichen PID-Reglers übertragen werden. Wird kein Regler gefunden, mit welchem die Pole des geschlossenen Regelkreises für die vollständige Modellfamilie in das Polgebiet fallen, lässt sich dies leicht an einem großen Wert des Gütekriteriums am Ende der Optimierung erkennen. Um dennoch einen robusten Regler zu entwerfen, kann beispielsweise das Polgebiet vergrößert oder die Reglerstruktur, zum Beispiel Wahl eines PID-Reglers anstatt eines PI-Reglers, verändert werden.

Kann jedoch kein robuster Regler entworfen werden, so ist in automatisierter Weise ein Reglerentwurf gemäß dem sogenannten Gain-Scheduling-Verfahren anwendbar, bei welchem für die Cluster jeweils ein Regler bestimmt wird und wobei das für den jeweiligen Cluster erhaltene dynamische Streckenmodell als Basis für den Reglerentwurf verwendet wird.

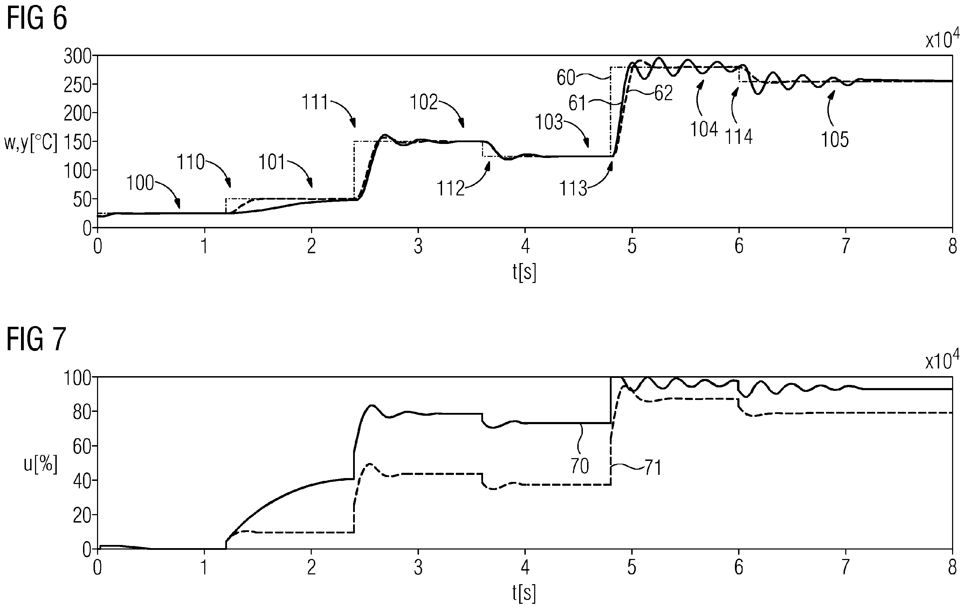

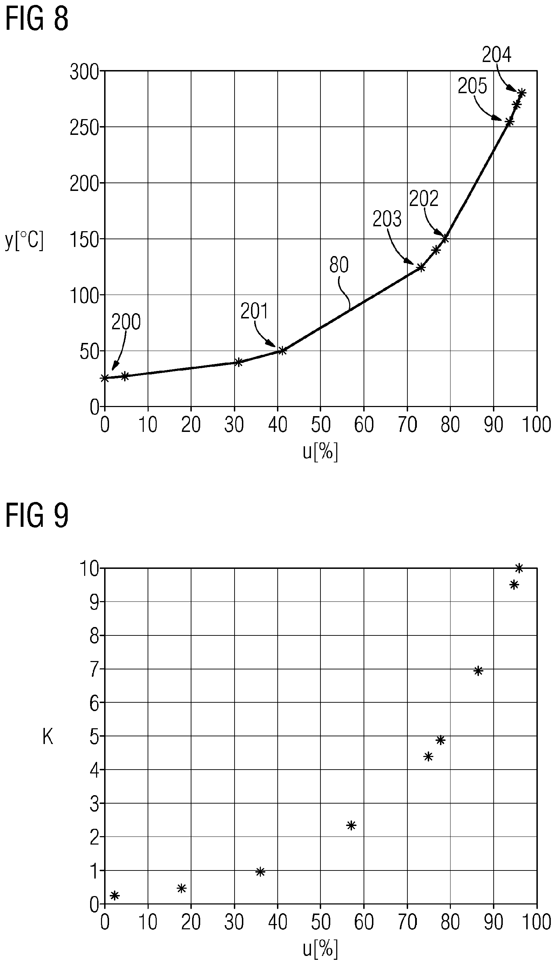

In den Figuren 6 und 7 sind als Beispiele ein Verlauf 60 eines Sollwerts, ein Verlauf 61 einer Regelgröße bzw. ein Verlauf 70 einer Stellgröße dargestellt, die einem Datensatz, der im Datenspeicher 6 (Figur 1) hinterlegt ist, entsprechen. An der Abszisse ist jeweils die Zeit t in Sekunden (s), an der Ordinate Sollwert w und Regelgröße y in Grad Celsius bzw. Stellgröße u in Prozent aufgetragen. Gemäß einem ersten Auswahlkriterium wird der Datensatz nach Zeitabschnitten durchsucht, in welchen der Regelkreis in einem Automatikbetrieb mit zumindest näherungsweise konstantem Sollwert w gefahren wurde. Dabei können Zeitabschnitte 100 ... 105 gefunden werden, die jeweils etwa bei Erreichen eines stationären Zustands beginnen und kurz vor Auftreten der jeweils nächsten Sollwertänderung enden. In jedem der Zeitabschnitte 100 ... 105, die jeweils einen stationären Zustand enthalten, wird ein zeitlicher Mittelwert der Regelgröße y und der Stellgröße u ermittelt und in ein Diagramm gemäß Figur 8 eingetragen. Auf diese Weise werden für den Zeitabschnitt 100 ein stationärer Punkt 200, für den Zeitabschnitt 101 ein stationärer Punkt 201 und so weiter erhalten. Die Verbindung aller sortierten stationären Punkte 200 ... 205 liefert eine stationäre Kennlinie 80 der Regelstrecke. In den Figuren 6 und 7 ist nicht der vollständige, der Auswertung zugrunde liegende Datensatz dargestellt. Weitere, in Figur 8 nicht mit Bezugszeichen versehene stationäre Punkte beruhen auf außerhalb des Darstellungsbereichs gefundenen stationären Zuständen.

Zwischen jedem Paar benachbarter Punkte wird anschließend die lokale Streckenverstärkung berechnet. Die dabei erhaltenen Ergebnisse einer Streckenverstärkung K, die vom jeweiligen Arbeitspunkt abhängig ist, sind im Diagramm gemäß Figur 9 über der Stellgröße u aufgetragen. Es ist ersichtlich, dass sich der größte und der kleinste Wert der Streckenverstärkung K um mehr als den Faktor 10 unterscheiden. Aufgrund dieses deutlichen Unterschieds beim Modellparameter Streckenverstärkung K kann bereits die Diagnoseaussage erhalten werden, dass eine deutliche Nichtlinearität der Regelstrecke vorliegt und mit einem konventionellen Regler alleine kaum eine Regelgüte erhalten werden kann, die über dem gesamten Regelbereich ausreichend ist. Wäre dagegen die lokale Streckenverstärkung K überall nahezu gleich, könnte eine nichtlineare Kennlinie ausgeschlossen und die Diagnoseaussage getroffen werden, dass möglicherweise bereits mit einem konventionellen Regler alleine eine ausreichende Regelgüte erhalten werden kann.

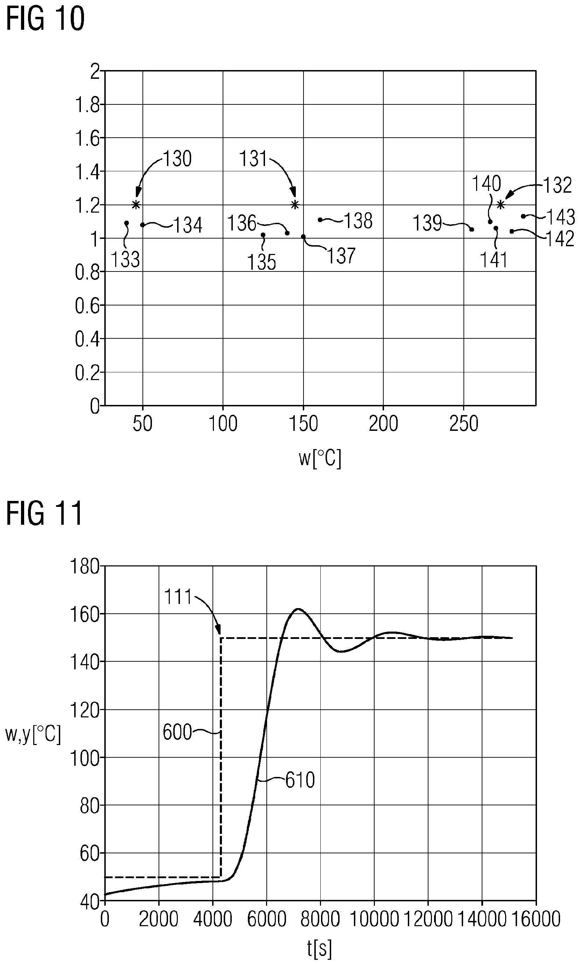

Für die Zeitabschnitte 100 ... 105 (Figur 6) und weitere, in Figur 6 nicht dargestellte Zeitabschnitte, welche dasselbe Auswahlkriterium erfüllen, werden jeweils Mittelwerte für erfasste Werte der Prozessvariable Sollwert berechnet. Zudem wird mittels der Auswerteeinrichtung 7 (Figur 1) anhand des im Speicher 6 (Figur 1) hinterlegten Datensatzes der Wertebereich der Prozessvariable Sollwert bestimmt und anhand der berechneten Mittelwerte in eine Mehrzahl von Clustern eingeteilt, deren Anzahl vorzugsweise die Zahl fünf nicht übersteigt. Figur 10 zeigt das Ergebnis dieses so genannten Clusterings, welches in dem dargestellten Ausführungsbeispiel mit einem k-Means-Algorithmus erhalten wurde. Über einen gefundenen Wertebereich der Stellgröße w in Grad Celsius auf der Abszisse sind drei berechnete Clusterzentren 130, 131 und 132 als Sterne markiert. Berechnete Mittelwerte 133 ... 143 sind als Punkte markiert. Die Mittelwerte 133 ... 143 sowie die zu ihrer Berechnung jeweils verwendeten Zeitabschnitte aus dem Datensatz und die jeweils zugehörigen Zeitausschnitte der Datenfolgen werden den beim Clustering gebildeten Clustern mit den Clusterzentren 130, 131 und 132 zugeordnet.

Bezüglich der in Figur 10 gewählten Darstellung ist zu bemerken, dass die Ordinate und die dort verwendete Skalierung ohne Bedeutung sind und nur dazu dienen, dass die verschiedenen Werte des Sollwerts w über der Abszisse mit dem zur automatischen Erstellung der Darstellung verwendeten Werkzeug anzeigbar sind.

Bei einer weiteren Diagnose wird der Datensatz, von welchem ein Ausschnitt in Figur 6 gezeigt ist, gemäß einem zweiten Auswahlkriterium nach Sollwertsprüngen durchsucht. Anfangs- und Endwerte der gefundenen Sollwertsprünge werden auf ihre Clusterzugehörigkeit geprüft und gefundene Sprünge, deren Anfangs- und Endwert zum selben Cluster gehören, dem jeweiligen Cluster zugeordnet. Große Sollwertsprünge, deren Anfangs- und Endwert verschiedenen Clustern zugehören, können dabei nicht einem einzelnen Cluster zugeordnet werden.

Anhand des in Figur 6 dargestellten Ausschnitts des Datensatzes können auf diese Weise Sollwertsprünge 110 ... 114 gefunden werden. Anhand der identifizierten Sollwertsprünge werden jeweils Zeitabschnitte aus dem Datensatz ausgewählt, wobei diese eine gewisse Zeit vor Auftreten des Sollwertsprungs beginnen und eine gewisse Zeit nach dem Sollwertsprung enden. Zur Verdeutlichung der prinzipiellen Vorgehensweise ist in Figur 9 der Zeitbereich von 19.692 Sekunden bis 34.770 Sekunden mit Teilverläufen 600 und 610 der in Figur 6 dargestellten Verläufe 60 bzw. 61 der Prozessvariablen Sollwert bzw. Regelgröße dargestellt. Die an der Abszisse aufgetragene Zeitskala entspricht dabei dem Offset der Zeitpunkte gegenüber dem Beginn des Zeitabschnitts bei t = 19.692 Sekunden. Da es sich bei dem Sprung 111 um einen großen handelt, dessen Anfangswert im Cluster des Clusterzentrums 130 (Figur 10) und dessen Endwert im Cluster des Clusterzentrums 131 (Figur 10) liegt, kann der Sprung 111 und somit der entsprechende Zeitabschnitt keinem der zuvor gebildeten Cluster zugeordnet werden. Am Teilverlauf 610 ist ein gewisses Überschwingen der Regelgröße y erkennbar, welches in den meisten Anwendungen als zulässiges Regelkreisverhalten angesehen werden kann. Im Vergleich dazu ist das Einschwingverhalten bei den lediglich in Figur 6 eingezeichneten Sollwertsprüngen 110 und 113 deutlich gedämpfter bzw. ungedämpfter. Es sind somit je nach Arbeitspunkt deutliche Unterschiede des Einschwingverhaltens bei Sollwertsprüngen erkennbar, die als Auswirkungen der Nichtlinearität auf das Regelverhalten bei Sollwertsprüngen angesehen werden können.

Die Sollwertsprünge 110, 112 und 114 sind vergleichsweise klein, so dass Anfangs- und Endwerte der Sprünge jeweils im selben Cluster zu liegen kommen. Die jeweiligen Zeitabschnitte und diesen entsprechenden Datenfolgen der Prozessvariablen werden der Lage der Anfangs- und Endwerte entsprechend dem jeweiligen Cluster zugeordnet und durch Auswertung der Datenfolgen der Prozessvariablen Stellgröße und Regelgröße für die Cluster jeweils ein dynamisches Streckenmodell identifiziert. Weitere, in den Figuren 6 und 7 nicht dargestellte, gemäß dem zweiten Auswahlkriterium gefundene auswertbare Zeitabschnitte des vorhandenen Datensatzes werden ebenfalls entsprechend den Werten der Prozessvariable Sollwert den Clustern zugeordnet. Auch Zeitbereiche mit variablen Sollwert, die komplett in einem Cluster liegen, können dem jeweiligen Cluster zugeordnet werden. Die zuvor für die verschiedenen Cluster identifizierten Streckenmodelle werden durch Simulation vom Beginn des ersten Sprungs im Cluster bis zum erstmaligen Verlassen des Clusters oder über eine auf andere geeignete Weise spezifizierten maximalen Simulationsdauer validiert. Falls eine dabei erhaltene Modellgüte nicht ausreichend ist, kann sich eine erneute Identifikation des betreffenden Modells anschließen, wobei ein anderer, beispielsweise längerer, Zeitabschnitt zur Modellidentifikation verwendet wird.

Für eine anschließende Bewertung des Gesamtverhaltens der Regeleinrichtung über alle Cluster wird eine Simulation des vollständigen Regelkreises mit Verwendung des bisherigen Reglers und des jeweils arbeitspunktabhängig ausgewählten Modells für den jeweiligen Cluster durchgeführt. Falls die bei dieser Simulation berechnete Regelgüte über alle Cluster hinweg ausreichend hoch ist und sich zwischen den Clustern nicht stark voneinander unterscheidet, sind eine mögliche Nichtlinearität des Streckenmodells und Unterschiede der Streckendynamik so gering, dass sie sich nicht störend auf das Verhalten der Regelung auswirken. In diesem Fall wird als Diagnoseaussage erhalten, dass kein weiterer Handlungsbedarf besteht.

Falls dagegen die Regelgüte in verschiedenen Clustern deutlich unterschiedlich ausfällt, aber Verstärkungsfaktoren und Zeitkonstanten der für die Cluster jeweils identifizierten Modelle nicht zu weit auseinander liegen, kann auf die bereits oben näher beschriebene, automatische Weise ein Entwurf eines robusten Reglers durchgeführt werden, bei welchem möglicherweise Parameter für einen konventionellen Regler gefunden werden, die mit allen Modellen eine zufriedenstellende Regelgüte ergeben.

In dem Fall, dass die Streckenverstärkung deutlich nichtlinear ist, das heißt die Streckenmodelle für verschiedene Cluster deutlich voneinander abweichende Verstärkungsfaktoren aufweisen, und dass jedoch die dynamischen Teilmodelle nur wenig voneinander abweichende Zeitkonstanten besitzen, kann eine Optimierung der Regeleinrichtung durch Verwendung des bereits oben beschriebenen Hammerstein-Modells vorgenommen werden. Falls eine Validierung des Hammerstein-Modells über den gesamten Datensatz eine gute Approximation des Prozessverhaltens ergibt, kann die anhand Figur 2 erläuterte Struktur der Regeleinrichtung gewählt und einem Anwender zur Verbesserung seiner Regelung vorgeschlagen werden.

In dem weiteren Fall, dass die Regelgüte bei Verwendung des bisherigen Reglers in verschiedenen Clustern sehr unterschiedlich ausfällt und als Ursachen deutlich auseinander liegende Verstärkungsfaktoren sowie Zeitkonstanten der verschiedenen Modelle festgestellt wurden, wird zur Optimierung der Regeleinrichtung die Verwendung eines Reglers vorgeschlagen, der nach dem Gain-Scheduling-Verfahren entworfen ist, das heißt ein Regler, der automatisch separat für jedes Cluster entworfen ist und mit einem Parameterfahrplan mit linearer Interpolation für die Übergänge zwischen den Clustern versehen ist.

In jedem Fall kann abschließend eine Simulation des vorgeschlagenen Regelungskonzepts, beispielsweise robuster Regler, Regler mit Kennlinienkompensation oder nach Gain-Scheduling-Verfahren entworfener Regler, mit dem besten ermittelten Modell des Streckenverhaltens, beispielsweise Hammerstein Modell oder Familie linearer Modelle mit Parametersteuerung, über dem gesamten Arbeitsbereich durchgeführt werden, bevor die neue Regeleinrichtung einem Anwender zur Übernahme in seiner Anlage angeboten wird.

Bei der anhand eines Beispieldatensatzes beschriebenen Überwachung eines Regelkreises, bei welcher die in den Figuren 6 bis 13 gezeigten Daten erfasst bzw. ermittelt werden, wird festgestellt, dass die Regelstrecke 1 (Figur 1) durch ein Hammerstein-Modell 13 (Figur 2) sehr gut approximiert werden kann und daher ein Regler 11 mit nachgeschaltetem Kompensationsglied 12 ein besseres Regelverhalten ermöglicht als der bisherige Regler alleine. Um dies zu verdeutlichen, sind in den Figuren 6 und 7 zusätzlich ein Verlauf 62 der Regelgröße bzw. ein Verlauf 71 der durch den Regler 11 ausgegebenen Stellgröße u eingezeichnet, die mit einer derartigen Optimierung erhalten werden können. Es ist deutlich erkennbar, dass durch eine nach dem zuvor beschriebenen Verfahren automatisiert entworfene, optimierte Regeleinrichtung über den gesamten Arbeitsbereich, insbesondere auch bei kleinen und großen Sollwerten, ein gutes Regelverhalten durch die beschriebene Optimierung erzielbar ist.

Es werden somit eine Diagnoseeinrichtung und ein Verfahren geschaffen, die es vorteilhaft ermöglichen, auch bei nichtlinearen Prozessen eine automatische Überwachung der Regelgüte durchzuführen und gegebenenfalls automatisch Vorschläge zur Verbesserung der Regelgüte oder zur Optimierung der Regeleinrichtung abzuleiten. Die Bereitstellung von drei verschiedenen Optimierungsmethoden, von denen je nach identifiziertem Streckenmodell die geeignetste automatisch ausgewählt werden kann, hat den Vorteil, dass für die meisten praxisrelevanten Problemstellungen eine angemessene Lösung gefunden werden kann. Der Entwurf eines robusten Reglers ist mit dem geringsten Aufwand bei der Implementierung verbunden und kann immer dann im Rahmen einer Optimierung verwendet werden, wenn die damit erreichbare Regelgüte bereits den Anforderungen genügt. Bei einer guten Approximation der Regelstrecke durch ein Hammerstein-Modell kann durch Verwendung eines Reglers mit nachgeschaltetem Kompensationsglied eine meist höhere Regelgüte erreicht werden, wobei sich diese Methode ebenfalls durch ihre Einfachheit und Transparenz auszeichnet. Genügt auch damit die Regelgüte nicht den Anforderungen, wird ein automatischer Reglerentwurf nach dem Gain-Scheduling-Verfahren vorgeschlagen. Durch eine Wahlmöglichkeit aus den drei Optimierungsverfahren lassen sich die vom Anwender gestellten Anforderungen im Hinblick auf die Regelgüte und auf die Transparenz der Reglerstruktur in einfacher Weise berücksichtigen.

## Patentansprüche

1. Diagnoseeinrichtung zur Überwachung und/oder Optimierung einer Regeleinrichtung (2) für eine Regelstrecke (1), wobei die Diagnoseeinrichtung (5) dazu ausgebildet ist, zumindest einen Datensatz mit im Betrieb der Regeleinrichtung (2) erfassten zeitlichen Datenfolgen zumindest der Prozessvariablen Sollwert (w), Stellgröße (u) und Regelgröße (y) der Regelstrecke (1) abzuspeichern, **gekennzeichnet durch** eine Auswerteeinrichtung (7), die dazu ausgebildet ist, anhand zumindest eines vorbestimmten Auswahlkriteriums verschiedene Zeitabschnitte (100 ... 105) aus dem Datensatz auszuwählen, für mehrere der ausgewählten Zeitabschnitte jeweils anhand der demselben Zeitabschnitt zugehörigen Zeitausschnitte der Datenfolgen der Prozessvariablen Stellgröße (u) und Regelgröße (y) zumindest einen Parameter (K) eines Streckenmodells zu bestimmen und für verschiedene Zeitabschnitte erhaltene Modellparameter zur Bestimmung und/oder Anzeige einer Diagnoseaussage auszuwerten.

2. Diagnoseeinrichtung nach Anspruch 1, **dadurch gekennzeichnet, dass** die Auswerteeinrichtung (7) dazu ausgebildet ist, gemäß einem ersten Kriterium, welches zur Auswahl von Zeitabschnitten (100 ... 105) eines ersten Typs vorgesehen ist, den Datensatz nach Zeitabschnitten einer vorgegebenen oder vorgebbaren Mindestdauer zu durchsuchen, in welchen erfasste Werte der Prozessvariable Sollwert (w) zumindest näherungsweise konstant sind, für gemäß dem ersten Kriterium ausgewählte Zeitabschnitte (100 ... 105) jeweils Mittelwerte für erfasste Werte der Prozessvariablen Stellgröße (u) und Regelgröße (y) zu berechnen und anhand der Mittelwerte Werte eines Modellparameters Streckenverstärkung (K) zu ermitteln.

3. Diagnoseeinrichtung nach Anspruch 2, **dadurch gekennzeichnet, dass** die Auswerteeinrichtung (7) dazu ausgebildet ist, für gemäß dem ersten Kriterium ausgewählte Zeitabschnitte (100 ... 105) jeweils Mittelwerte für erfasste Werte der Prozessvariable Sollwert (w) zu berechnen, den Wertebereich der Prozessvariable Sollwert (w) zu ermitteln, den ermittelten Wertebereich anhand der berechneten Mittelwerte der Prozessvariable Sollwert (w) in eine Mehrzahl von Clustern einzuteilen und die gemäß dem ersten Kriterium ausgewählten Zeitabschnitte (100 ... 105) entsprechend den jeweiligen Mittelwerten der Prozessvariable Sollwert den Clustern zuzuordnen.

4. Diagnoseeinrichtung nach Anspruch 3, **dadurch gekennzeichnet, dass** die Auswerteeinrichtung (7) dazu ausgebildet ist, gemäß einem zweiten Kriterium, welches zur Auswahl von Zeitabschnitten eines zweiten Typs vorgesehen ist, den Datensatz nach Zeitabschnitten zu durchsuchen, die einen Sollwertsprung (110, 112, 114) aufweisen, wobei Anfangswert und Endwert des Sprungs (110, 112, 114) innerhalb desselben Clusters liegen, und die ausgewählten Zeitabschnitte des zweiten Typs den Anfangs- und Endwerten entsprechend den Clustern zuzuordnen, und dass die Auswerteeinrichtung (7) weiterhin dazu ausgebildet ist, für Cluster, denen jeweils zumindest ein gemäß dem zweiten Kriterium ausgewählter Zeitabschnitt zugeordnet ist, anhand der dem jeweiligen Zeitabschnitt entsprechenden Datenfolgen zumindest der Prozessvariablen Stellgröße (u) und Regelgröße (y) jeweils ein dynamisches Streckenmodell (15) zu identifizieren und für verschiedene Cluster erhaltene dynamische Streckenmodelle zur Bestimmung und/oder Anzeige einer Diagnoseaussage auszuwerten.

5. Diagnoseeinrichtung nach einem der Ansprüche 2 bis 4, **dadurch gekennzeichnet, dass** die Auswerteeinrichtung (7) dazu ausgebildet ist, ein Kennlinienglied (12) zur Kompensation einer vom jeweiligen Wert der Prozessvariablen Stellgröße (u) abhängigen Prozessverstärkung (K) zu bestimmen und dieses in der Regeleinrichtung (10) zwischen Regler (11) und Strecke (1, 13) zu schalten derart, dass das Kennlinienglied (12) und die Regelstrecke (1, 13) insgesamt ein zumindest näherungsweise lineares Verhalten aufweisen.

6. Diagnoseeinrichtung nach Anspruch 4, **dadurch gekennzeichnet, dass** die Auswerteeinrichtung (7) dazu ausgebildet ist, für die Cluster anhand von Simulationsläufen für ausgewählte Zeitabschnitte (100 ... 105), wobei das für den jeweiligen Cluster erhaltene dynamische Streckenmodell verwendet wird, jeweils einen Wert eines vorgegebenen oder vorgebbaren Gütekriteriums zu berechnen und die dabei erhaltenen Werte zur Bestimmung und/oder Anzeige einer Diagnoseaussage auszuwerten.

7. Diagnoseeinrichtung nach Anspruch 6, **dadurch gekennzeichnet, dass** die Auswerteeinrichtung (7) dazu ausgebildet ist, einen robusten Regler modellbasiert anhand der für die Cluster erhaltenen dynamischen Streckenmodelle mit einem Verfahren der Polbereichsvorgabe mittels Gütevektoroptimierung zu ermitteln.

8. Diagnoseeinrichtung nach Anspruch 6, **dadurch gekennzeichnet, dass** die Auswerteeinrichtung (7) dazu ausgebildet ist, zur Implementierung einer Regeleinrichtung (2) gemäß einem so genannten Gain-Scheduling-Verfahren für die Cluster jeweils einen Regler zu bestimmen, wobei das für den jeweiligen Cluster erhaltene dynamische Streckenmodell als Basis für den Reglerentwurf verwendet wird.

9. Verfahren zur Überwachung und/oder Optimierung einer Regeleinrichtung (2, 10) für eine Regelstrecke (1), wobei zumindest ein Datensatz mit im Betrieb der Regeleinrichtung (2) erfassten zeitlichen Datenfolgen zumindest der Prozessvariablen Sollwert (w), Stellgröße (u) und Regelgröße (y) der Regelstrecke (1) abgespeichert wird, **dadurch gekennzeichnet, dass** durch eine Auswerteeinrichtung (7) anhand zumindest eines vorbestimmten Auswahlkriteriums verschiedene Zeitabschnitte (100 ... 105) aus dem Datensatz ausgewählt werden, für mehrere der ausgewählten Zeitabschnitte jeweils anhand der demselben Zeitabschnitt zugehörigen Zeitausschnitte der Datenfolgen der Prozessvariablen Stellgröße (u) und Regelgröße (y) zumindest ein Parameter eines Streckenmodells bestimmt wird und dass für verschiedene Zeitabschnitte erhaltene Modellparameter zur Bestimmung und/oder Anzeige einer Diagnoseaussage ausgewertet werden.

10. Computerprogramm mit durch einen Computer ausführbaren Programmcodeanweisungen zur Implementierung des Verfahrens nach Anspruch 9, wenn das Computerprogramm auf einem Computer ausgeführt wird.

11. Computerprogrammprodukt, insbesondere Datenträger oder Speichermedium mit einem durch einen Computer ausführbaren Computerprogramm gemäß Anspruch 10.
